# EUROPEAN PATENT SPECIFICATION

(11) **EP 3 284 214 B1**
(45) Date of publication and mention of the grant of the patent: **01.05.2019**
(21) Application number: 15908948.1
(22) Date of filing: 18.11.2015
(51) Int. Cl.: H04L 12/24, H04L 12/26

(54) **CONVERGED SYSTEM COMPLIANCE CHECKING**
KONVERGIERTE SYSTEM-COMPLIANCE-ÜBERPRÜFUNG
VÉRIFICATION DE CONFORMITÉ DE SYSTÈME CONVERGÉ

(43) Date of publication of application: 21.02.2018
(73) Proprietor: Hewlett Packard Enterprise Development LP, Houston, TX 77070 (US)
(72) Inventor: STABNOW, Michael R., Ft. Collins, Colorado 80528-9544 (US); SATTERFIELD, Wade J., Ft. Collins, Colorado 80528-9544 (US); EASTERLING, Tyler, Ft. Collins, Colorado 80528-9544 (US); SCHEETZ, Michael A., Ft. Collins, Colorado 80528-9544 (US); ASHWORTH, Brian, Ft. Collins, Colorado 80528-9544 (US); HANSON, Scott D., Ft. Collins, Colorado 80528-9544 (US); HILL, Justin C., Ft. Collins, Colorado 80528-9544 (US); SAITO, Ronald Francis, Ft. Collins, Colorado 80528-9544 (US); WARDEN, Jon Duane, Ft. Collins, Colorado 80528-9544 (US)
(74) Representative: ZBM Patents - Zea, Barlocci & Markvardsen
(86) International application number: PCT/US2015/061436
(87) International publication number: WO 2017/086959

(56) References cited:
- GB-A- 2 374 434
- US-A1- 2009 319 531
- US-A1- 2013 219 156
- US-A1- 2014 059 196
- US-A1- 2014 108 000
- US-A1- 2014 108 000
- US-A1- 2014 142 881
- US-A1- 2015 324 277
- US-B1- 8 584 247

## Description

### BACKGROUND

Converged systems, which are also commonly referred to as "converged infrastructure", "unified computing", "engineered system", "fabric-based computing", "dynamic infrastructure," etc., can allow for the grouping of multiple types of enterprise hardware and software components into a single, optimized computing packaging that can allow for simplified infrastructure lifecycle management and maintenance. Organizations can, for example, use such converged systems to centralize the management of Information Technology (IT) resources, consolidate systems, increase resource-utilization rates, and lower costs. US2009/0319531 discloses testing implementation of documented behavior of a device.

The present invention is defined in the appended independent claims to which reference should be made. Advantageous features are set out in the appended dependent claims.

### BRIEF DESCRIPTION OF DRAWINGS

FIG. 1 is a diagram illustrating a test converged system and a baseline converged system, according to an example.
FIG. 2 is a flowchart for a method, according to an example.
FIG. 3 is a flowchart for a method, according to another example.
FIG. 4 is a flowchart for a method, according to another example.
FIG. 5 is a diagram of a converged system, according to an example.
FIG. 6 is a diagram of a converged system, according to another example.
FIG. 7 is a diagram of machine-readable storage medium, according to an example.

### DETAILED DESCRIPTION

The following discussion is directed to various examples of the disclosure. Although one or more of these examples may be preferred, the examples disclosed herein should not be interpreted, or otherwise used, as limiting the scope of the disclosure, including the claims. In addition, the following description has broad application, and the discussion of any example is meant only to be descriptive of that example, and not intended to intimate that the scope of the disclosure, including the claims, is limited to that example. Throughout the present disclosure, the terms "a" and "an" are intended to denote at least one of a particular element. In addition, as used herein, the term "includes" means includes but not limited to, the term "including" means including but not limited to. The term "based on" means based at least in part on.

Converged systems can operate by grouping multiple hardware components (e.g., data center servers, storage devices, and networking equipment), along with software (e.g., software for management and automation) into a single, optimized computing package. Some converged systems can, for example, include hardware and software optimized for a given application or applications, such as for example cloud computing, big data analytics, client virtualization, Infrastructure-as-a-Service (laaS), or another suitable application or applications. For such converged systems, specific hardware, cabling, and software tailored to the application can be installed in order to optimize the system.

Converged Systems are often complex and failures can occur when the systems are misconfigured. Certain implementations of the present disclosure are directed to reduce the likelihood of misconfiguration and to facilitate the process of compliance checking. For example, in some implementations, a converged system is configured to allow for compliance checking to confirm that its hardware and software is properly installed and properly configured. Certain implementations of the present disclosure can allow for functionality such as allowing an administrator to propose changes to the converged system with some assurance that none of the changes are in violation of the designer's expectations. As another example, in some implementations, when a support call comes in, a support engineer or other representative can confirm whether a converged system is configured as expected and covered under warranty, or whether the system has been altered to the point that the customer might need to be charged for a service to bring the converged system back into compliance. Other advantages of implementations presented herein will be apparent upon review of the description and figures.

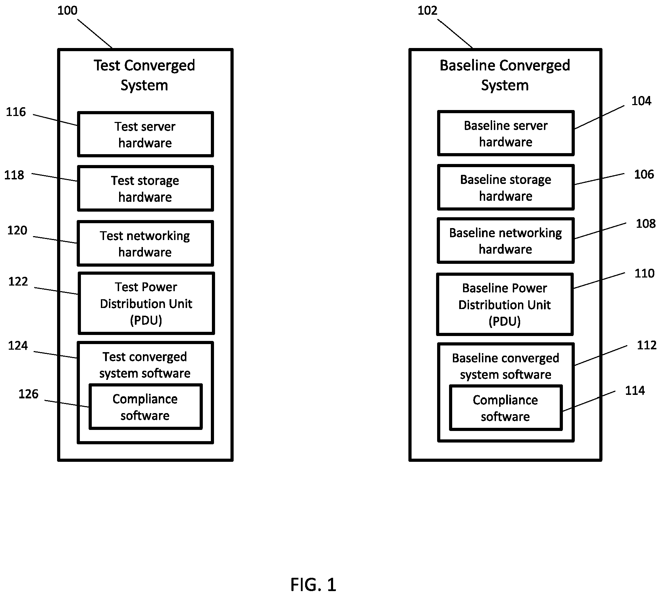

FIG. 1 is a diagram of a test converged system 100 and a baseline converged system 102. The example baseline converged system 102 of FIG. 1 includes baseline server hardware 104, baseline storage hardware 106, baseline networking hardware 108, baseline Power Distribution Unit (PDU) hardware 110, and baseline converged system software 112 that includes baseline converged system compliance software 114, which is described in detail below. Likewise, the example test converged system 100 of FIG. 1 includes test server hardware 116, test storage hardware 118, test networking hardware 120, test PDU hardware 122, and test converged system software 124 that includes test converged system compliance software 126, which is described in detail below. It is appreciated that converged systems in other implementations of the present disclosure can include alternative or additional hardware and software and that the above description is merely an example implementation for the purposes of description.

As used herein, the term "baseline" is intended to refer to a system and components that are to be used as a model for compliance (e.g., a model converged system in a lab setting), whereas the term "test" as applied to test converged system 100 and components thereof is intended to refer to a system and components (e.g., a converged system in a customer environment) that are to be checked for compliance against a model (e.g., a model converged system in a lab setting). Although FIG. 1 illustrates test converged system 100 and baseline converged system 102 side-by-side for discussion purposes, it is appreciated that these systems will likely not be present at the same location (and/or at the same time). For example, in some implementations, a Research & Development (R&D) team can build baseline converged system 102 and capture relevant data about that system for purposes of compliance checking. This data can then be packaged with the product and shipped to customers. The customer can, for example, own a test converged system 100 and compare this system with the stored baseline data. In some situations, the R&D team may choose to build a new baseline converged system with updated software and confirm that all of that software works together. A new file might then be created and shipped out to customers with software to upgrade their system to the new version. Compliance testing can confirm that the update worked smoothly. That is, in some implementations, test converged system 100 is not directly compared to baseline converged system 102. Instead, in such implementations, the systems are compared indirectly through a saved file of data.

Moreover, it is appreciated, that the designation of "baseline" or "test" for a converged system is not necessarily based on location or environment of the system. For example, in some situations, a test converged system may at some point switch to become a baseline converged system and the former baseline system could be altered and then used as the test converged system. For example, once a test converged system is tested and confirmed as being in compliance, it may be designated as a baseline converged system for future testing. Likewise, if new hardware or software is installed on a baseline converged system (or if configuration settings are changed), the system may be re-designated as a test converged system.

In some implementations, test converged system 100 and baseline converged system 102 have the same type, model, and/or configuration of hardware. In some implementations, the two systems may have different hardware. For example, in some implementations, baseline converged system 102 may include hardware in the form of a CD-ROM drive, whereas test converged system 100 may not include a CD-ROM drive. In such a situation, there may (for some systems) be a minimal likelihood of certain hardware (such as a CD-ROM drive) causing misconfiguration issues or conflicts with other installed hardware or software. As a result, an operator may nevertheless allow such a system to serve as a baseline converged system for the test converged system. It is appreciated that certain hardware may carry a greater risk of misconfiguration issues or conflicts. For example, a test converged system using a PowerPC Central Processing Unit (CPU) may, in some situations and for some systems, be inappropriate for use with a baseline converged system using an Intel x86 CPU. Notwithstanding the above examples, in some situations, the use of different models or types of hardware between baseline converged system 102 and test converged system 100 (e.g., different models of server hardware, storage hardware, networking hardware, etc.) may be used. The suitability of using different models or types of hardware can, for example, be based on the level of compliance checking performed and the hardware and software profiles of the converged system.

Server hardware 104 and 116 for use in a converged system can, for example, refer to any suitable server equipment, such as, for example, equipment that is able to accept requests from clients and respond to the requests. Suitable server hardware for use in a converged system can, for example, be used to share data or hardware and software resources among clients. In some implementations, server hardware can, for example, be in the form of one or more database servers, file servers, mail servers, print servers, web servers, game servers, application servers, management servers (e.g., for managing the converged system or another system(s) or device(s)), or any other suitable type of server or servers. In some implementations, server hardware 104 and 116 are in the form of a blade system and/or one or more blade servers. Such a blade system can, for example, include one or more blade servers enclosed within a blade enclosure. The blade enclosure can, for example, be configured to hold multiple blade servers, as well as providing services such as power, cooling, and networking, to the blade servers.

Storage hardware 106 and 118 for use in a converged system can, for example, refer to equipment that is able to record data by one or more electronic, magnetic, optical, mechanical, or another change to a medium. For example, in some implementations storage hardware 106 and 118 can be in the form of a disk array, a JBOD collection ("Just a Bunch of Disks"), a Serial Attached SCSI (SAS) switch with a JBOD, a Virtual SAN Appliance (VSA), etc., and/or any suitable rack-mounted storage hardware. The rack-mounted storage hardware can, for example, include one or more data storage mediums in the form of a rotating disk (such as for example a hard disc drive or optical disc drive), storage tape, solid state drives (SSDs), or any other suitable storage medium. In some implementations, storage hardware 106 and 118 can be in the form of a disk array. For example, in some implementations, storage hardware 106 and 118 are in the form of a Redundant Array of Independent Disks (RAID) in which data storage virtualization technology is used to combine multiple physical disk drive components into a single logical unit for the purposes of data redundancy, performance improvement, and/or other purposes.

Networking hardware 108 and 120 can, for example, refer to equipment that is able to connect devices together on a computer network, by using packet switching to receive, process, and/or forward data to the destination device. In some implementations, networking hardware 108 and 120 are in the form of a network switch that uses hardware addresses to process and forward data at the data link layer (e.g., layer 2 of the Open Systems Interconnection (OSI) model). In some implementations, networking hardware 108 and 120 can process data at the network layer (e.g., layer 3 of the OSI mode) by incorporating routing functionality that can, for example, use Internet Protocol (IP) addresses to perform packet forwarding. Such networking hardware can, for example, be in the form of a layer-3 switch or multilayer switch. Networking hardware can, for example, be in the form of a machine used to provide virtualized networking functions on a virtual machine. For example, in some implementations, compliance checking can be performed on a networking device running inside of a Virtual Machine (VM). In some implementations, a router can provide Network Address Translation (NAT) from an internal network, which is only connected to the devices within the converged system, to a management network for the data center.

PDU hardware 110 and 122 can, for example, refer to equipment that includes multiple outputs designed to distribute electric power to other equipment within a converged system, such as for example, server, storage, and networking hardware within respective converged systems. In some implementations, PDU hardware 110 and 122 can provide functions such as power filtering to improve power quality, intelligent load balancing, remote monitoring and control, and/or other functions.

As provided above, test converged system 100 can include test converged system software 124 which can, for example, include test converged system compliance software 126. Likewise, baseline converged system 102 can include baseline converged system software 112 which can, for example, include baseline converged system compliance software 114. Converged system software 112 and 124 can, for example, refer to any software that is run by test converged system 100 and baseline converged system 102, such as an Operating System (OS), firmware, applications, etc. Such software can, for example, include software that can be used to simplify day-to-day infrastructure management. For example, in some implementations such software can be used to pool and allocate software-defined and physical resources through a single, user-friendly interface. Moreover, in some implementations, the software can be used to automate time-consuming manual tasks, such as change management, configuration consistency, system software updates, etc.

Test converged system compliance software 126 and baseline converged system compliance software 114 can, for example, refer to software used to conduct compliance checking. Such compliance checking can make use of multiple techniques. One example technique for compliance checking relies on the use of Representational State Transfer (REST) calls to compare returned data for a test converged system to corresponding data that was collected against a baseline converged system. Further details regarding test converged system compliance software 126 and baseline converged system compliance software 114 are provided herein.

In some implementations, test converged system software 124 and baseline converged system software 112 have the same type, purpose, version, and/or configuration of software. In some implementations, the two systems may have different software. Although in some implementations, test converged system 100 has identical software as baseline converged system 102 in order to reduce inconsistencies between the machines (e.g., both machines may run a SAP HANA platform or both machines may run a private cloud platform), it is appreciated that in some implementations, test converged system 100 may include different software than baseline converged system 102 that nevertheless may allow for suitable compliance checking.

Test converged system 100 and baseline converged system 102 can, for example, be arranged so as to allow for the passing of compliance checking information from baseline converged system 102 to test converged system 100 (and/or vice versa). In some implementations, the systems can be in data communication via one or more data channels. Such data channels can, for example, be in the form of data cables or wireless data channels. In some implementations, test converged system 100 and baseline converged system 102 are in data communication via a portable storage medium. For example, data from baseline converged system 102 can be stored on a portable storage medium, such as a Universal Serial Bus (USB) flash drive. The flash drive can then be plugged into test converged system 100 for use by test converged system 100. It is appreciated that any suitable form of data transfer between baseline converged system 102 and test converged system 100 can be used in accordance with certain implementations of the present disclosure.

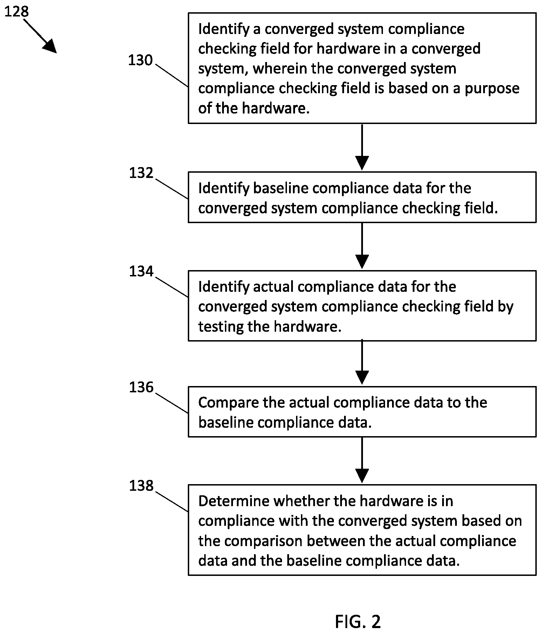

FIG. 2 illustrates a flowchart for a method 128 according to an example of the present disclosure. For illustration, the description of method 128 and its component steps make reference to example test converged system 100 and elements thereof, such as for test server hardware 116. It is appreciated that method 128 or aspects thereof can be used or otherwise applicable for any suitable converged system, computing device, etc., described herein or otherwise. For example, method 128 can be applied to converged systems without the hardware illustrated in FIG. 1.

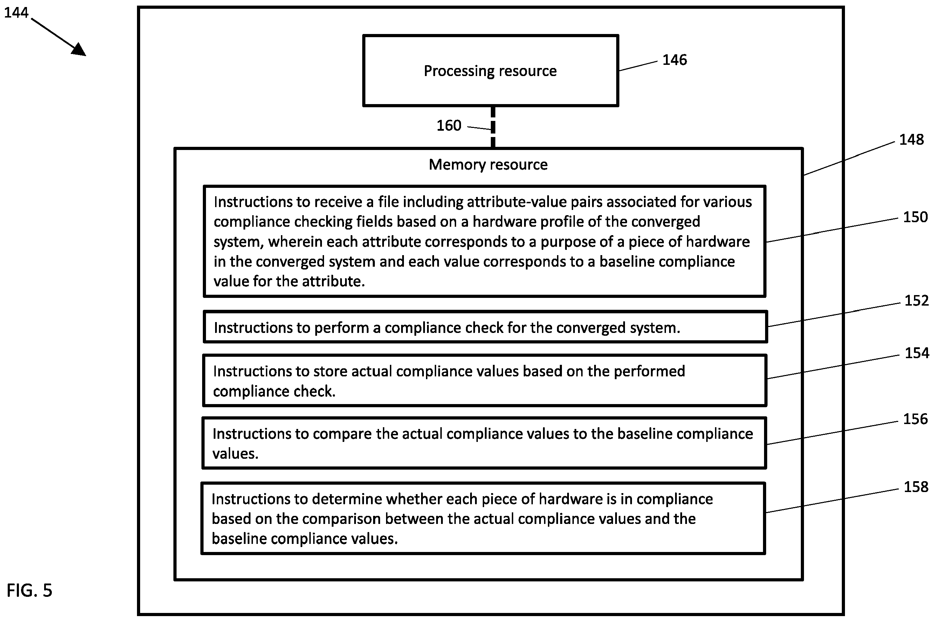

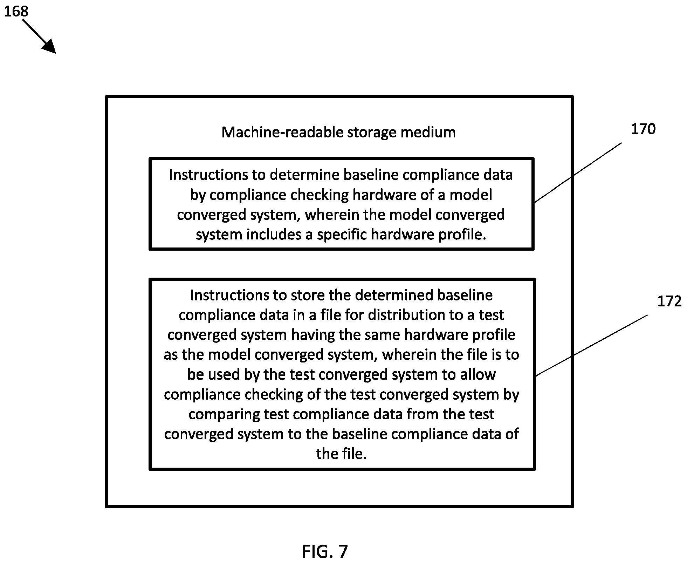

In some implementations, method 128 can be implemented or otherwise executed through the use of executable instructions stored on a memory resource (e.g., a memory resource of the converged system of FIG. 5), executable machine-readable instructions stored on a storage medium (e.g., the medium of FIG. 7), in the form of electronic circuitry (e.g., on an Application-Specific Integrated Circuit (ASIC)), and/or another suitable form. Although the description of method 128 herein primarily refers to steps performed on test converged system 100 for purposes of illustration, it is appreciated that in some implementations, method 128 can be executed on another computing device in data communication with test converged system 100.

In some implementations, a management module of test converged system 100 can be used to perform one or more steps of method 128. Such a management module can, for example, include one or more hardware or software components of test converged system 100, such as test server hardware 116 and/or test storage hardware 118. In some implementations, a management module can be standalone hardware and software of test converged system 100.

Method 128 includes identifying (at block 130) a converged system compliance checking field for hardware in a converged system. The compliance checking fields can, for example, be used to confirm that the converged system's hardware is properly installed and that its hardware and software components are properly configured. In some implementations this can, for example, include confirming that certain hardware components are present, confirming that a correct version of firmware is installed in each of the hardware components, and confirming that certain software is installed and configured. Hardware checks can, for example, be used to confirm that servers, disk arrays, switches (and/or other hardware) are present, as well as confirming that each piece of hardware is in its correct location in the rack, that power cords for each piece of hardware are plugged into the correct outlet of a Power Distribution Unit (PDU) and that network cables interconnect the correct ports. Software checks can, for example, insure that hypervisor software is installed, management Virtual Machines (VMs) are defined, software is installed in each server and VM, and that the software is configured correctly.

The checking field can, for example, be based on a purpose of the hardware. For example, hardware being used as a server (e.g., test server hardware 116) can include checking fields different than hardware being used for storage (e.g., test storage hardware 118).

A non-limiting set of example compliance checking fields for server hardware can, for example, include fields used to confirm: (1) the server is the correct model, (2) the server has adequate memory, (3) the server has adequate compute resources, (4) the boot ROM is at the right patch level, (5) the firmware in the Network Interface Card (NIC) and Host Bus Adapter (HBA) cards is at the right level, (6) the firmware in a Baseboard Management controller (BMC), (7) the version of the operating system, (8) the version of software running on the server, (9) the power connections are redundant, (10) the network connections are redundant, and/or (11) any other suitable compliance checking fields for server hardware.

A non-limiting set of example compliance checking fields for storage hardware can, for example, include fields used to confirm: (1) the model of the disk array, (2) the firmware version of the disk array, (3) the storage capacity of the disk array, (4) the power connections are redundant, and/or (5) any other suitable compliance checking fields for storage hardware.

A non-limiting set of example compliance checking fields for networking hardware can, for example, include fields used to confirm: (1) the model of the switch, (2) the firmware version of the switch, (3) the correct set of ports have connections, and/or (4) any other suitable compliance checking fields for networking hardware.

A non-limiting set of example compliance checking fields for PDU hardware can, for example, include fields used to confirm: (1) the model of the PDU, (2) the firmware version, (3) the correct set of outlets have connections, (4) each outlet is connected to the right device, and/or (5) any other suitable compliance checking fields for PDU hardware.

In some implementations, block 130 can include identifying a first set and second set of converged system compliance checking fields for respective first and second pieces of hardware in the converged system. The first and second sets of compliance checking fields can, for example, be based on the respective purposes of the first and second pieces of hardware. Block 130 can include retrieving the first set and second set of converged system compliance checking fields from a "Test File," which can for example list all of the fields within objects that are returned by a REST API (or other retrieval interface) and can, for example, indicate which fields should be tested, and what operator should be used to test the different fields.

Method 128 includes identifying (at block 132) baseline compliance data for the compliance checking field. The baseline compliance data for the hardware can, for example, be stored in the form of JavaScript Object Notation (JSON) formatted values for use by the converged system. In some implementations, block 132 can include identifying baseline compliance data for multiple sets of compliance checking fields.

In some implementations, block 132 of identifying baseline compliance data can, for example, include using both the purpose of an object as well as its "category". The category can, for example, be a list of types defined by a software management tool of the converged system. Such categories can, for example, include hardware (e.g,. server hardware, enclosures, interconnects, switches, and PDUs). In some implementations, such categories can include logical objects maintained by the management tool that can, for example, be used to configure hardware, such as server profiles, logical enclosures, and logical interconnects. Such logical objects can, for example, be considered as a place to store settings for hardware objects, and may be considered to be an extension of the hardware. In some implementations, a purpose may be assigned to each object. The purpose can, for example, be in the form of text for each piece or hardware. This can, for example, allow for a user or other entity to tell the difference between a management server and a hypervisor in a private cloud Converged System.

In some implementations, block 132 of identifying baseline compliance data for the compliance checking field can, for example, include retrieving, using a REST call, such data from a remote server over a network connection. Other suitable retrieval methods can be used to retrieve such data. For example, in some implementations, any suitable kind of interface can be used to retrieve this data, such as for example a Simple Object Access Protocol (SOAP) interface, a Direct Media Interface (DMI) interface, a Remote Procedure Call (RPC), a Web-Based Enterprise Management (WBEM), a local shell command, etc. In some implementations, a copy of the baseline data can be ready off of a disk of test converged system 100. The baseline compliance data can be created and organized in view of standardizing a large number of tests to use the data returned from REST calls, which can make for a simple record and play back model for test creation. For example, a script can be written to make the same REST calls that are done when doing compliance tests, but update (or rebuild) "golden files" for comparison rather than comparing returned data against such golden files. This can allow for relatively easy updating of compliance tests while a baseline converged system is still in design, and is being changed frequently.

Method 128 includes identifying (at block 134) actual compliance data for the compliance checking field by testing the hardware. In some implementations, block 134 can include identifying actual compliance data for the first and second sets of compliance checking fields. Actual compliance data can be retrieved, using a REST call, from test converged system100. Other suitable retrieval methods can be used to retrieve such data. For example, in some implementations, any suitable kind of interface can be used to retrieve this data, such as for example a Simple Object Access Protocol (SOAP) interface, a Direct Media Interface (DMI) interface, a Remote Procedure Call (RPC), a Web-Based Enterprise Management (WBEM), a local shell command, etc.

Method 128 includes comparing (at block 136) the actual compliance data to the baseline compliance data and determining (at block 138) whether the hardware is in compliance with the converged system based on the comparison between the actual compliance data and the baseline compliance data. As an example, in some implementations block 138 can include determining whether a boot order of a computer system within test converged system 100 is configured as specified in the baseline compliance data.

In some implementations, block 136 can include comparing actual compliance data for the first set of compliance checking fields to the baseline compliance data for the first set of compliance checking fields. Likewise, in some implementations, block 136 can include comparing actual compliance data for the second set of compliance checking fields to the baseline compliance data for the second set of compliance checking fields. In some implementations, the actual compliance data and the baseline compliance data are in the same format to facilitate comparison. In some implementations, the actual compliance data is in a different format from the baseline compliance data and one or both sets of compliance data is to be converted to a suitable form to allow for comparison at block 136. Comparing actual compliance data to baseline compliance data can, for example, include comparing whether two or more values are equal. In some situations, comparing can include checking whether a value or values is greater than or equal to another value or values. Such comparisons can, for example, be numeric, such as when checking whether there is enough memory or a string comparison, such as a comparison where it is confirmed that a string (e.g., a version "A.5.10") has a "greater" value than another string (e.g., a version "A.5.9"). Other comparison operations, such as less than, less than or equal to, etc., can be used. As an example, in some implementations, a compliance check can be provided to ensure that a serial number is not blank, or is not a number used in prototype hardware, or the version number of unreleased software.

In some implementations, block 138 can include determining whether the first piece of hardware is in compliance with the converged system based on the comparison between the actual compliance data for the first set of compliance checking fields and the baseline compliance data for the first set of compliance checking fields. Likewise, in some implementations, block 138 can include determining whether the second piece of hardware is in compliance with the converged system based on the comparison between the actual compliance data for the second set of compliance checking fields and the baseline compliance data for the second set of compliance checking fields. As an example, in some implementations, block 138 can include determining whether a boot order of a computer system within the converged system is configured as specified in the baseline compliance data.

Although the flowchart of FIG. 2 shows a specific order of execution, it is appreciated that this order may be rearranged into another suitable order, may be executed concurrently or with partial concurrence, or a combination thereof. Likewise, suitable additional and/or comparable steps may be added to method 128 or other methods described herein in order to achieve the same or comparable functionality. In some implementations, one or more steps are omitted. For example, in some implementations, block 130 of identifying a converged system compliance checking field can be omitted from method 128. It is appreciated that blocks corresponding to additional or alternative functionality of other implementations described herein can be incorporated in method 128. For example, blocks corresponding to the functionality of various aspects of systems described herein can be incorporated in method 128 even if such functionality is not explicitly characterized herein as a block in a method.

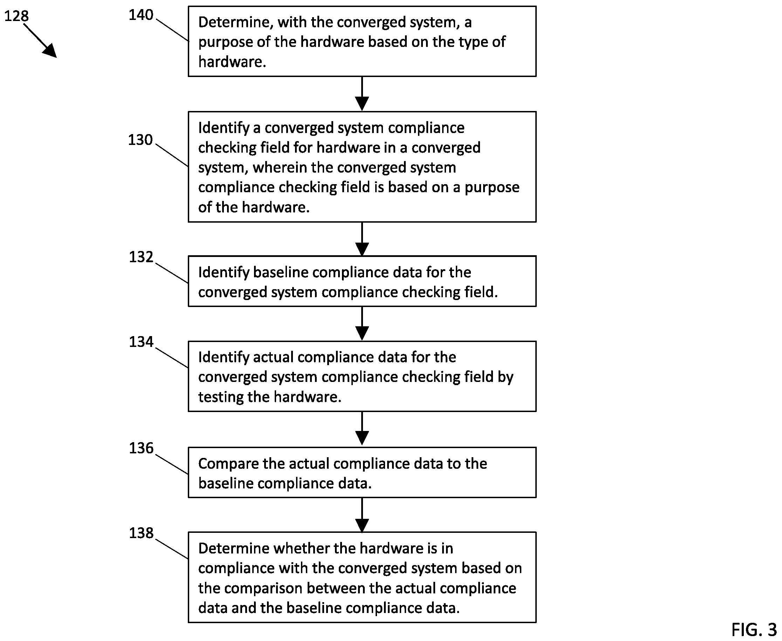

FIG. 3 illustrates another example of method 128 in accordance with the present disclosure. For illustration, FIG. 3 reproduces various blocks from method 128 of FIG. 2,. It is appreciated that method 128 of FIG. 3 can include additional, alternative, or fewer steps, functionality, etc., than method 128 of FIG. 2 and is not intended to be limited by the diagram of FIG. 2 (or vice versa) or the related disclosure thereof. It is further appreciated that method 128 of FIG. 2 can incorporate one or more aspects of method 128 of FIG. 3 and vice versa. For example, in some implementations, method 128 of FIG. 2 can include the additional step described below with respect to method 128 of FIG. 3.

Method 128 of FIG. 3 includes determining (at block 140), with the converged system, a purpose of the hardware based on the type of hardware. For example, in some implementations, PDU hardware (e.g., PDU hardware 122) can be associated with a "power distribution" purpose. In some implementations, a type of hardware can be communicated to a management module (or other hardware/ software/ module) of test converged system 100 via automatic discovery of a hardware component in a system without user intervention (e.g., certain plug and play hardware). In some implementations, the type of hardware can be communicated manually via user intervention, such as by a network administrator manually entering a type of hardware installed on test converged system 100.

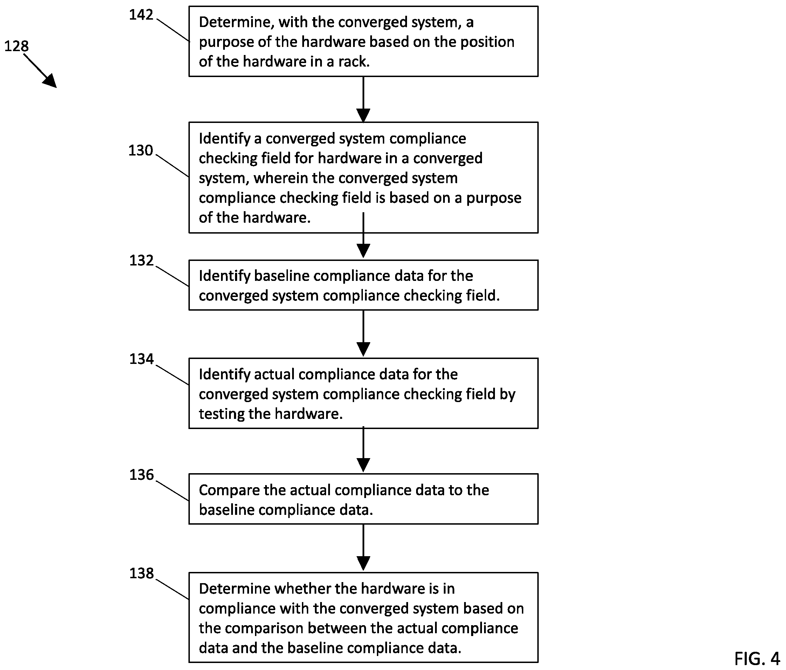

FIG. 4 illustrates another example of method 128 in accordance with the present disclosure. For illustration, FIG. 4 reproduces various blocks from method 128 of FIG. 2. It is appreciated that method 128 of FIG. 4 can include additional, alternative, or fewer steps, functionality, etc., than method 128 of FIG. 4 and is not intended to be limited by the diagram of FIG. 2 (or vice versa) or the related disclosure thereof. It is further appreciated that method 128 of FIG. 2 can incorporate one or more aspects of method 128 of FIG. 4 and vice versa. For example, in some implementations, method 128 of FIG. 2 can include the additional step described below with respect to method 128 of FIG. 4.

Method 128 of FIG. 4 includes determining (at block 142), with the converged system, a purpose of the hardware based on the position of the hardware in a rack. For example, in some implementations, hardware located at a top position of a rack may be designated as networking hardware depending on conventions used by the converged system manufacturer. The dimensions of hardware (e.g., 1RU, 2RU) can, in some implementations, be used to determine a purpose of the hardware. For example, depending on conventions used by a converged system manufacturer, networking hardware may not exceed 4RU, whereas storage hardware may exceed 4RU. In this example, if hardware installed on test converged system has a dimension of 5RU, test converged system 100 may determine that the hardware is not networking hardware. It is appreciated that the above is merely an example and that more advanced determination techniques may be applied in accordance with the principles of the present disclosure.

Notwithstanding the above description, it is appreciated that an installer module may be ultimately responsible for setting a purpose of hardware in the converged systems. That is, although a model string (e.g., block 140) or rack position (e.g., block 142) can assist in setting a purpose, an installer module can be provided as a general solution with ultimately responsibility for assigning purpose in the converged system.

A specific example implementation in accordance with the present disclosure will now be described. It is appreciated that this implementation may include certain aspects of other implementations described herein (and vice-versa), but it is not intended to be limiting towards other implementations described herein. In this specific example, a "system" object class can be defined. This class can, for example, be two classes but the instances can be created in a 1-to-1 relationship, such that from a compliance perspective they are logically one class. The system object can, for example, contain a list of all of the hardware in the system and can, for example, include a purpose value for each piece of hardware. The purpose value can for example, be in the form of a simple text field that specifies which golden file to use when running the compliance tests. The purpose value can, for example, allow the compliance checker to find the corresponding hardware between the Converged System designer's environment where the data was recorded and the customer's environment that is being checked. Other identifying values, such as hostnames, serial numbers, and World Wide Identifiers (WWIDs) can change and, in some situations, may not be suitable for use in finding corresponding data.

A system template can also be created (or retrieved) that lists all of the purposes allowed for each kind of hardware that might be allowed in the converged system. For each of these purposes there can, for example, include a file that holds serialized data that is returned when making a REST query about objects with that purpose. The serialized data can, for example, be in JSON format, or another suitable format, such as XML or any other format supported by the REST interface or another suitable interface.

The designer of a converged system can, for example, create a golden file for a baseline converged system by capturing REST data returned for each object in the baseline converged system. As provided above, it is appreciated that any suitable kind of interface can be used to retrieve this data, such as for example a Simple Object Access Protocol (SOAP) interface, a Direct Media Interface (DMI) interface, a Remote Procedure Call (RPC), a Web-Based Enterprise Management (WBEM), a local shell command, etc. For purposes of this description, the disclosure will refer to the use of a REST API. The data can, for example, be stored with the type and purpose as a key and can be composed into a directory name and a file name in a directory. The designer of a converged system can also create a "Test File" that lists all of the fields within the objects that are returned by the REST API and can indicate which fields should be tested, and what operator should be used to test the different fields. If the field holds a firmware version string, the designer may choose to ensure that it is exactly equal to the version of firmware they tested with. If that firmware has a promise of backward compatibility, the designer may choose to test that the firmware version string is greater than or equal to the version they tested with. Other fields, like the hostname of the server, might be chosen to be left to the customer to change as they wish, and may not be included in the list of fields to be tested.

When checking the compliance of the converged system, a list of all hardware in the system may be used for compliance checking. Each object in the list can be compliance tested and a REST interface can be used to read all of the data known about the object. The purpose of the object can be fetched as well. The purpose values can, for example, be set when the system object is created. This can, for example, be done manually by a factory engineer. In some implementations, hardware model numbers and rack positions can be used to automatically assign purpose values as the components are added to the system. The type of the object and the purpose of the object can, for example, be used to recall the golden file of data. Each of the fields returned by the REST interface can then be compared with the corresponding fields in the recalled golden file according to instructions in the test file.

In implementations where purposes are defined for each object, such purposes can provide a designer or tester a mechanism to indirectly confirm relationships between components of a converged system. That is, rather than confirming that two components are configured together using their serial number or an internal unique ID, the purpose of the object can be looked up and compared. For example, it may be recorded that PDU 1234567 has server 7654321 plugged into port 3, and also that PDU 1234567 has a purpose of "upper iPDU" and that server 7654321 has purpose of "Management host". When compliance checking is performed, rather than comparing the serial number of the devices that are plugged into port 3 of the "upper iPDUs", the purposes of the devices may be compared instead. Such indirect tests of purposes can, for example, be useful in confirming a rack position of the components (including blades in enclosures), power connections, and network connections. Test results, passes and failures, or just failures, can, for example, be organized into a compliance report. It is appreciated that additional analysis of test results can be performed and/or reported.

Certain implementations of the present disclosure can exhibit one or more advantages. For example, the technique described herein (e.g., the method of FIG. 2 and/or the specific example described above) can quickly perform a compliance checking of a test converged system. For example, because a test engine may walk through each of objects in the system, it can be used to make each REST call only once. In contrast, a technique that tests one field at a time, but tests ten fields in an object might make the same REST call ten times, once for each field.

This technique can, for example, allow flexibility in the size of the Converged System. A private cloud might be built using 4 to 64 blades as compute nodes. As long as all of the compute nodes have a common purpose, they can (for some implementations) all be compared against a common golden file. Moreover, in some implementations, it can be easy to re-record the golden files. For example, if during the development of a converged system, newer hardware is substituted, it can be easy to recapture the data from the REST interfaces and overwrite the golden files. New model strings, firmware, processor model strings, memory sizes, core counts, etc., can all be re-recorded. It is appreciated that certain implementations of the present disclosure further allow the converged system designer to have full control over which fields should be checked, and how strictly, and which fields should be ignored.

FIG. 5 is a diagram of an example system 144 in accordance with the present disclosure. As described in further detail below, among other hardware, system 144 includes a processing resource 146 and a memory resource 148 that stores machine-readable instructions 150, 152, 154, 156, and 158. For illustration, the description of system 144 of FIG. 5 makes reference to various aspects of the diagram of FIG. 1 as well as method 128 of FIGs. 2-4. It is appreciated that system 144 of FIG. 5 can include additional, alternative, or fewer aspects, functionality, etc., than these implementations and is not intended to be limited by the related disclosure thereof. System 144 can, for example, be in the form of a converged system, such as test converged system 100 or baseline converged system 102. In such an implementation, processing resource can be in the form of server hardware 116 and memory resource 148 can be in the form of storage hardware 118. In some implementations, system 144 is separate from test converged system 100 and baseline converged system 102. For example, in some implementations, system 144 can be in the form of a general purpose computer that is able to determine whether test converged system 100 is in compliance with baseline converged system 102.

Instructions 150 stored on memory resource 148 are, when executed by processing resource 146, to cause processing resource 146 to receive a file including attribute-value pairs associated for various compliance checking fields based on a hardware profile of test converged system 100. Each attribute can, for example, correspond to a purpose of a piece of hardware in the converged system and each value can, for example, correspond to a baseline compliance value for the attribute. It is appreciated that instructions 150 can, for example, include one or more aspects of block 130 of identifying a converged system compliance checking field for hardware in a converged system, and vice-versa. For example, in some implementations the compliance checking field of block 130 can be in the form of an attribute-value pair.

Instructions 152 stored on memory resource 148 are, when executed by processing resource 146, to cause processing resource 146 to perform a compliance check for the converged system and instructions 154 stored on memory resource 148 are, when executed by processing resource 146, to cause processing resource 146 to store actual compliance values based on the performed compliance check. It is appreciated that instructions 152 and 154 can, for example, include one or more aspects of block 134 of identifying actual compliance data for the compliance checking field by testing the hardware, and vice-versa.

Instructions 156 stored on memory resource 148 are, when executed by processing resource 146, to cause processing resource 146 to compare the actual compliance values to the baseline compliance values. It is appreciated that instructions 156 can, for example, include one or more aspects of block 136 of comparing the actual compliance data to the baseline compliance data, and vice-versa.

Instructions 158 stored on memory resource 148 are, when executed by processing resource 146, to cause processing resource 146 to determine whether hardware of the converged system is in compliance based on the comparison between the actual compliance values and the baseline compliance values. It is appreciated that instructions 158 can, for example, include one or more aspects of block 138 of determining whether the hardware is in compliance with the converged system based on the comparison between the actual compliance data and the baseline compliance data and vice-versa.

Processing resource 146 of system 144 can, for example, be in the form of a central processing unit (CPU), a semiconductor-based microprocessor, a digital signal processor (DSP) such as a digital image processing unit, other hardware devices or processing elements suitable to retrieve and execute instructions stored in memory resource 148, or suitable combinations thereof. Processing resource 146 can, for example, include single or multiple cores on a chip, multiple cores across multiple chips, multiple cores across multiple devices, or suitable combinations thereof. Processing resource 146 can be functional to fetch, decode, and execute instructions as described herein. As an alternative or in addition to retrieving and executing instructions, processing resource 146 can, for example, include at least one integrated circuit (IC), other control logic, other electronic circuits, or suitable combination thereof that include a number of electronic components for performing the functionality of instructions stored on memory resource 148. The term "logic" can, in some implementations, be an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Processing resource 146 can, for example, be implemented across multiple processing units and instructions may be implemented by different processing units in different areas of system 144.

Memory resource 148 of system 144 can, for example, be in the form of a non-transitory machine-readable storage medium, such as a suitable electronic, magnetic, optical, or other physical storage apparatus to contain or store information such as machine-readable instructions 150, 152, 154, 156, and 158. Such instructions can be operative to perform one or more functions described herein, such as those described herein with respect to method 128 or other methods described herein. Memory resource 148 can, for example, be housed within the same housing as processing resource 146 for system 144, such as within a computing tower case for system 144 (in implementations where system 144 is housed within a computing tower case). In some implementations, memory resource 148 and processing resource 146 are housed in different housings. As used herein, the term "machine-readable storage medium" can, for example, include Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof. In some implementations, memory resource 148 can correspond to a memory including a main memory, such as a Random Access Memory (RAM), where software may reside during runtime, and a secondary memory. The secondary memory can, for example, include a nonvolatile memory where a copy of machine-readable instructions are stored. It is appreciated that both machine-readable instructions as well as related data can be stored on memory mediums and that multiple mediums can be treated as a single medium for purposes of description.

Memory resource 148 can be in communication with processing resource 146 via a communication link 160. Communication link 160 can, for example, be local or remote to a machine (e.g., a computing device) associated with processing resource 146. Examples of a local communication link 160 can include an electronic bus internal to a machine (e.g., a computing device) where memory resource 148 is one of volatile, non-volatile, fixed, and/or removable storage medium in communication with processing resource 146 via the electronic bus.

In some implementations, one or more aspects of system 144, test converged system 100 and baseline converged system 102 can be in the form of functional modules that can, for example, be operative to execute one or more processes of instructions 150, 152, 154, 156, or 158 or other functions described herein relating to other implementations of the disclosure. As used herein, the term "module" refers to a combination of hardware (e.g., a processor such as an integrated circuit or other circuitry) and software (e.g., machine- or processor-executable instructions, commands, or code such as firmware, programming, or object code). A combination of hardware and software can include hardware only (i.e., a hardware element with no software elements), software hosted at hardware (e.g., software that is stored at a memory and executed or interpreted at a processor), or hardware and software hosted at hardware. It is further appreciated that the term "module" is additionally intended to refer to one or more modules or a combination of modules. Each module of a system 144 can, for example, include one or more machine-readable storage mediums and one or more computer processors.

In view of the above, it is appreciated that the various instructions of system 144 described above can correspond to separate and/or combined functional modules. For example, instructions 152 can correspond to a "compliance checking module" to perform a compliance check for the converged system. It is further appreciated that a given module can be used for multiple functions. As but one example, in some implementations, a single module can be used to both perform compliance checking (e.g., corresponding to the functionality of instructions 152) and to determine whether each piece of hardware is on compliance (e.g., corresponding to the functionality of instructions 158).

System 144 can further include a suitable communication module to allow networked communication between system 144 and other components of a network. Such a communication module can, for example, include a network interface controller having an Ethernet port and/or a Fibre Channel port. In some implementations, such a communication module can include wired or wireless communication interface, and can, in some implementations, provide for virtual network ports. In some implementations, such a communication module includes hardware in the form of a hard drive, related firmware, and other software for allowing the hard drive to operatively communicate with other hardware of a network. The communication module can, for example, include machine-readable instructions for use with communication the communication module, such as firmware for implementing physical or virtual network ports.

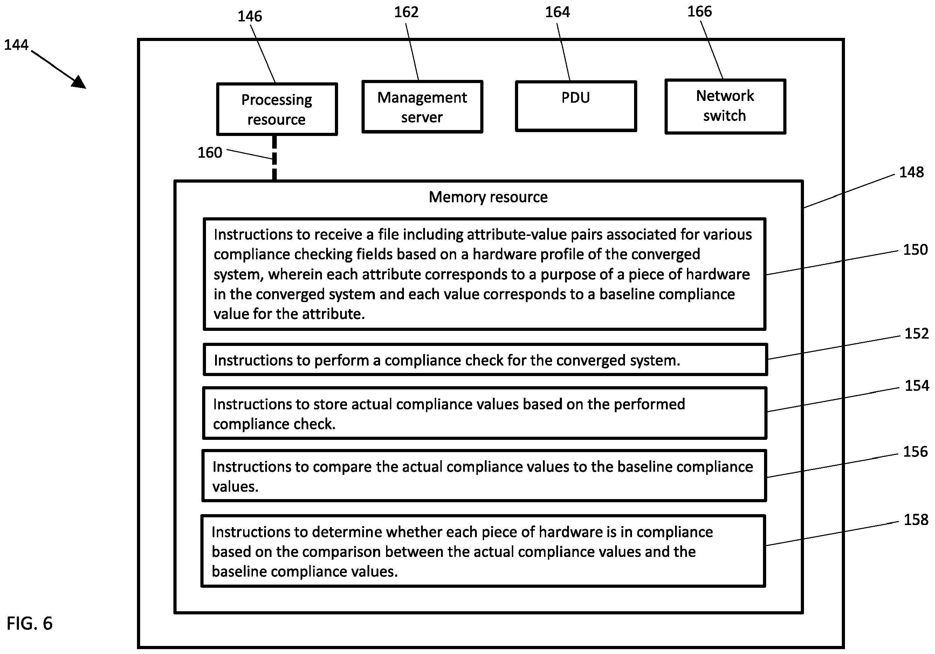

FIG. 6 is a diagram of another example system 144 in accordance with the present disclosure. Like system 144 of FIG. 5, system 144 of FIG. 6 includes a processing resource 146 and memory resource 148 with various instructions 150, 152, 154, 156, and 158. System 144 further includes server hardware in the form of a management server 162 to manage system 144, PDU hardware in the form of a PDU 164, and networking hardware in the form of a network switch 166, aspects of which are described for example above with respect to method 128. Like system 144 of FIG. 5, system 144 of FIG. 6 can, for example, be in the form of a converged system, such as test converged system 100 or baseline converged system 102. In some implementations, system 144 is separate from test converged system 100 and baseline converged system 102. In some implementations, certain hardware of system 144 shown separately in FIG. 6 can be integrated together into a single unit. For example, in some implementations, processing resource 146 can be installed as a processing resource for management server 162.

FIG. 7 illustrates a machine-readable storage medium 168 including various instructions that can be executed by a computer processor or other processing resource. In some implementations, medium 168 can be housed within a converged system such as test converged system 100, baseline converged system 102, and/or system 144, or on another suitable computing device.

For illustration, the description of machine-readable storage medium 168 provided herein makes reference to various aspects of system 144, test converged system 100, and baseline converged system 102 and other implementations of the disclosure (e.g., method 128). Although one or more aspects of these systems can be applied or otherwise incorporated with medium 168, it is appreciated that in some implementations, medium 168 may be stored or housed separately from such a system. For example, in some implementations, medium 168 can be in the form of Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof.

Medium 168 includes machine-readable instructions 170 stored thereon to cause processing resource 146 to determine baseline compliance data of baseline converged system 102 by compliance checking hardware of a model converged system. Instructions 170 can, for example, incorporate one or more aspects of block 132 of method 128 or instructions 150 of system 144 or another suitable aspect of other implementations described herein (and vice versa).

Medium 168 includes machine-readable instructions 172 stored thereon to cause processing resource 146 to store the determined baseline compliance data in a file for distribution to a test converged system (e.g.,. test converged system 100), that has the same or comparable hardware profile as the model converged system. The file can, for example, be used by the test converged system to allow compliance checking of the test converged system by comparing test compliance data from the test converged system to the baseline compliance data of the file. Examples of such compliance checking is provided herein for example with respect to the method of FIGs. 2-4 and the systems of FIGs. 5-6.

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. Furthermore, it should be appreciated that the systems and methods described herein can include various combinations and/or subcombinations of the components and/or features of the different implementations described. Thus, features described with reference to one or more implementations can be combined with other implementations described herein.

As used herein, "logic" is an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Further, as used herein, "a" or "a number of" something can refer to one or more such things. For example, "a number of widgets" can refer to one or more widgets. Also, as used herein, "a plurality of" something can refer to more than one of such things.

## Claims

1. A method (128) comprising:
identifying (130) a converged system compliance checking field for hardware in a converged system, wherein the converged system compliance checking field is based on a purpose of the hardware;
identifying (132) baseline compliance data for the converged system compliance checking field;
identifying (134) actual compliance data for the converged system compliance checking field by testing the hardware;
comparing (136) the actual compliance data to the baseline compliance data;
determining (138) whether the hardware is in compliance with the converged system based on the comparison between the actual compliance data and the baseline compliance data, the method being **characterized in**:
determining, with the converged system, the purpose of the hardware based on a position of the hardware in a rack.

2. The method of claim 1,
wherein identifying a converged system compliance checking field for hardware in a converged system includes identifying a first set of converged system compliance checking fields for a first piece of hardware in the converged system,
wherein the first set of converged system compliance checking fields is based on a purpose of the first piece of hardware,
wherein identifying baseline compliance data for the converged system compliance checking field includes identifying baseline compliance data for the first set of converged system compliance checking fields,
wherein identifying actual compliance data for the converged system compliance checking field includes identifying actual compliance data for the first set of converged system compliance checking fields,
wherein comparing the actual compliance data to the baseline compliance data includes comparing actual compliance data for the first set of converged system compliance checking fields to the baseline compliance data for the first set of converged system compliance checking fields, and
wherein determining whether the hardware is in compliance with the converged system based on the comparison between the actual compliance data and the baseline compliance data includes determining whether the first piece of hardware is in compliance with the converged system based on the comparison between the actual compliance data for the first set of converged system compliance checking fields and the baseline compliance data for the first set of converged system compliance checking fields.

3. The method of claim 2,
wherein identifying the converged system compliance checking field for hardware in a converged system includes identifying a second set of converged system compliance checking fields for a second piece of hardware in the converged system, wherein the second set of converged system compliance checking fields is based on a purpose of the second piece of hardware,
wherein identifying baseline compliance data for the converged system compliance checking field includes identifying baseline compliance data for the second set of converged system compliance checking fields,
wherein identifying actual compliance data for the converged system compliance checking field includes identifying actual compliance data for the second set of converged system compliance checking fields,
wherein comparing the actual compliance data to the baseline compliance data includes comparing actual compliance data for the second set of converged system compliance checking fields to the baseline compliance data for the second set of converged system compliance checking fields, and
wherein determining whether the hardware is in compliance with the converged system based on the comparison between the actual compliance data and the baseline compliance data includes determining whether the second piece of hardware is in compliance with the converged system based on the comparison between the actual compliance data for the second set of converged system compliance checking fields and the baseline compliance data for the second set of converged system compliance checking fields.

4. The method of claim 1, wherein the hardware includes a management server (162) for the converged system.

5. The method of claim 1, wherein the hardware includes a network switch (166).

6. The method of claim 1, wherein the converged system compliance checking field is retrieved using a Representational State Transfer, REST, call to a remote server over a network connection.

7. The method of claim 1, wherein the converged system is a test converged system and wherein the baseline compliance data is determined by compliance checking a model converged system including hardware having the same purpose as the hardware of the test converged system.

8. The method of claim 1, wherein the baseline compliance data for the hardware is stored as JavaScript Object Notation , JSON, formatted values for use by the converged system.

9. The method of claim 1, wherein determining that the hardware is in compliance includes determining whether a boot order of a computer system within the converged system is configured as specified in the baseline compliance data.

10. The method of claim 1, further comprising:
determining, with the converged system, the purpose of the hardware based on a type of hardware.

11. A non-transitory machine-readable storage medium (168) having stored thereon machine-readable instructions to cause a computer processor to operate according to any of the above method claims.

12. A converged system (144) comprising:
a processing resource (146); and
a memory resource (148) storing machine-readable instructions to cause the processing resource to operate according to any of method claims 1 to 10.

## Patentansprüche

1. Verfahren (128), Folgendes umfassend:
Identifizieren (130) eines Konvergiertes-System-Konformitätsüberprüfungsfeld für Hardware in einem konvergierten System, wobei das Konvergiertes-System-Konformitätsüberprüfungsfeld auf einem Zweck der Hardware basiert;
Identifizieren (132) von Basislinienkonformitätsdaten für das Konvergiertes-System-Konformitätsüberprüfu ngsfeld;
Identifizieren (134) tatsächlicher Konformitätsdaten für das Konvergiertes-System-Konformitätsüberprüfungsfeld, indem die Hardware getestet wird;
Vergleichen (136) der tatsächlichen Konformitätsdaten mit den Basislinienkonformitätsdaten;
Bestimmen (138), ob die Hardware mit dem konvergierten System auf Grundlage des Vergleichs zwischen den tatsächlichen Konformitätsdaten und den Basislinienkonformitätsdaten konform ist, wobei das Verfahren durch Folgendes gekennzeichnet ist:
Bestimmen des Zwecks der Hardware mit dem konvergierten System auf Grundlage einer Position der Hardware in einem Rack.

2. Verfahren nach Anspruch 1,
wobei das Identifizieren eines Konvergiertes-System-Konformitätsüberprüfungsfelds für Hardware in einem konvergierten System das Identifizieren eines ersten Satzes von Konvergiertes-System-Konformitätsüberprüfungsfeldern für ein erstes Stück von Hardware in dem konvergierten System beinhaltet,
wobei der erste Satz von Konvergiertes-System-Konformitätsüberprüfungsfeldern auf einem Zweck des ersten Stücks von Hardware basiert ist,
wobei das Identifizieren von Basislinienkonformitätsdaten für das Konvergiertes-System-Konformitätsüberprüfungsfeld das Identifizieren von Basislinienkonformitätsdaten für den ersten Satz von Konvergiertes-System-Konformitätsüberprüfungsfeldern beinhaltet,
wobei das Identifizieren von tatsächlichen Konformitätsdaten für das Konvergiertes-System-Konformitätsüberprüfungsfeld das Identifizieren von tatsächlichen Konformitätsdaten für den ersten Satz von Konvergiertes-System-Konformitätsüberprüfungsfeldern beinhaltet,
wobei das Vergleichen der tatsächlichen Konformitätsdaten mit den Basislinienkonformitätsdaten das Vergleichen tatsächlicher Konformitätsdaten für den ersten Satz von Konvergiertes-System-Konformitätsüberprüfungsfeldern mit den Basislinienkonformitätsdaten für den ersten Satz von Konvergiertes-System-Konformitätsüberprüfungsfeldern beinhaltet, und
wobei das Bestimmen, ob die Hardware mit dem konvergierten System auf Grundlage des Vergleichs zwischen den tatsächlichen Konformitätsdaten und den Basislinienkonformitätsdaten konform ist, das Bestimmen beinhaltet, ob das erste Stück von Hardware mit dem konvergierten System auf Grundlage des Vergleichs zwischen den tatsächlichen Konformitätsdaten für den ersten Satz von Konvergiertes-System-Konformitätsüberprüfungsfeldern und den Basislinienkonformitätsdaten für den ersten Satz von Konvergiertes-System-Konformitätsüberprüfungsfeldern konform ist.

3. Verfahren nach Anspruch 2,
wobei das Identifizieren des Konvergiertes-System-Konformitätsüberprüfungsfeldes für Hardware in einem konvergierten System das Identifizieren eines zweiten Satzes von Konvergiertes-System-Konformitätsüberprüfungsfeldern für ein zweites Stück von Hardware beinhaltet, wobei der zweite Satz von Konvergiertes-System-Konformitätsüberprüfungsfeldern auf einem Zweck des zweiten Stücks von Hardware basiert ist,
wobei das Identifizieren von Basislinienkonformitätsdaten für das Konvergiertes-System-Konformitätsüberprüfungsfeld das Identifizieren von Basislinienkonformitätsdaten für den zweiten Satz von Konvergiertes-System-Konformitätsüberprüfungsfeldern beinhaltet,
wobei das Identifizieren von tatsächlichen Konformitätsdaten für das Konvergiertes-System-Konformitätsüberprüfungsfeld das Identifizieren von tatsächlichen Konformitätsdaten für den zweiten Satz von Konvergiertes-System-Konformitätsüberprüfungsfeldern beinhaltet,
wobei das Vergleichen der tatsächlichen Konformitätsdaten mit den Basislinienkonformitätsdaten das Vergleichen tatsächlicher Konformitätsdaten für den zweiten Satz von Konvergiertes-System-Konformitätsüberprüfungsfeldern mit den Basislinienkonformitätsdaten für den zweiten Satz von Konvergiertes-System-Konformitätsüberprüfungsfeldern beinhaltet, und
wobei das Bestimmen, ob die Hardware mit dem konvergierten System auf Grundlage des Vergleichs zwischen den tatsächlichen Konformitätsdaten und den Basislinienkonformitätsdaten konform ist, das Bestimmen beinhaltet, ob das zweite Stück von Hardware mit dem konvergierten System auf Grundlage des Vergleichs zwischen den tatsächlichen Konformitätsdaten für den zweiten Satz von Konvergiertes-System-Konformitätsüberprüfungsfeldern und den Basislinienkonformitätsdaten für den zweiten Satz von Konvergiertes-System-Konformitätsüberprüfungsfeldern konform ist.

4. Verfahren nach Anspruch 1, wobei die Hardware einen Verwaltungsserver (162) für das konvergierte System beinhaltet.

5. Verfahren nach Anspruch 1, wobei die Hardware einen Netzwerkschalter (166) beinhaltet.

6. Verfahren nach Anspruch 1, wobei das Konvergiertes-System-Konformitätsüberprüfungsfeld unter Verwendung eines Aufrufs einer Darstellungszustandsübertragung (*representational state transfer -* REST) an einen entfernten Server über eine Netzwerkverbindung abgerufen wird.

7. Verfahren nach Anspruch 1, wobei das konvergierte System ein konvergiertes Prüfsystem ist und wobei die Basislinienkonformitätsdaten durch ein Konformitätsüberprüfen eines konvergierten Modelsystems, einschließlich Hardware, die denselben Zweck wie die Hardware des konvergierten Prüfsystems aufweist, bestimmt werden.

8. Verfahren nach Anspruch 1, wobei die Basislinienkonformitätsdaten für die Hardware als mit JavaScript Object Notation (JSON) formatierte Werte zur Verwendung durch das konvergierte System gespeichert werden.

9. Verfahren nach Anspruch 1, wobei das Bestimmen, dass die Hardware konform ist, das Bestimmen beinhaltet, ob eine Hochfahrordnung eines Computersystems innerhalb des konvergierten Systems wie in den Basislinienkonformitätsdaten spezifiziert konfiguriert ist.

10. Verfahren nach Anspruch 1, ferner Folgendes umfassend:
Bestimmen des Zweckes der Hardware mit dem konvergierten System auf Grundlage einer Art der Hardware.

11. Nichtflüchtiges maschinenlesbares Speichermedium (168) mit darauf gespeicherten maschinenlesbaren Anweisungen, um einen Computerprozessor dazu zu veranlassen, nach einem der oben genannten Verfahrensansprüche betrieben zu werden.

12. Konvergiertes System (144), Folgendes umfassend:
eine Verarbeitungsressource (146); und
eine Speicherressource (148) zum Speichern von maschinenlesbaren Anweisungen, um die Verarbeitungsressource dazu zu veranlassen, nach einem der Verfahrensansprüche 1 bis 10 betrieben zu werden.

## Revendications

1. Procédé (128) comprenant :
l'identification (130) d'un champ de vérification de conformité de système convergent pour un matériel dans un système convergent, le champ de vérification de conformité de système convergent étant basé sur un objectif du matériel ;
l'identification (132) de données de conformité de base pour le champ de vérification de conformité de système convergent ;
l'identification (134) de données de conformité réelles pour le champ de vérification de conformité de système convergent en testant le matériel ;
la comparaison (136) des données de conformité réelles avec les données de conformité de base ;
le fait de déterminer (138) si le matériel est en conformité avec le système convergent sur la base de la comparaison entre les données de conformité réelles et les données de conformité de base, le procédé étant **caractérisé en ce qu'**il comprend :
la détermination, avec le système convergent, de l'objectif du matériel sur la base d'une position du matériel dans un bâti.

2. Procédé selon la revendication 1,
dans lequel l'identification d'un champ de vérification de conformité de système convergent pour un matériel dans un système convergent inclut l'identification d'un premier ensemble de champs de vérification de conformité de système convergent pour un premier élément de matériel dans le système convergent,
le premier ensemble de champs de vérification de conformité de système convergent étant basé sur un objectif du premier élément de matériel,
l'identification de données de conformité de base pour le champ de vérification de conformité de système convergent incluant l'identification de données de conformité de base pour le premier ensemble de champs de vérification de conformité de système convergent,
l'identification de données de conformité réelles pour le champ de vérification de conformité de système convergent incluant l'identification de données de conformité réelles pour le premier ensemble de champs de vérification de conformité de système convergent,
la comparaison des données de conformité réelles avec les données de conformité de base incluant la comparaison de données de conformité réelles pour le premier ensemble de champs de vérification de conformité de système convergent avec les données de conformité de base pour le premier ensemble de champs de vérification de conformité de système convergent, et
le fait de déterminer si le matériel est en conformité avec le système convergent sur la base de la comparaison entre les données de conformité réelles et les données de conformité de base incluant le fait de déterminer si le premier élément de matériel est en conformité avec le système convergent sur la base de la comparaison entre les données de conformité réelles pour le premier ensemble de champs de vérification de conformité de système convergent et les données de conformité de base pour le premier ensemble de champs de vérification de conformité de système convergent.

3. Procédé selon la revendication 2,
dans lequel l'identification du champ de vérification de conformité de système convergent pour un matériel dans un système convergent inclut l'identification d'un second ensemble de champs de vérification de conformité de système convergent pour un second élément de matériel dans le système convergent, le second ensemble de champs de vérification de conformité de système convergent étant basé sur un objectif du second élément de matériel,
l'identification de données de conformité de base pour le champ de vérification de conformité de système convergent incluant l'identification de données de conformité de base pour le second ensemble de champs de vérification de conformité de système convergent,
l'identification de données de conformité réelles pour le champ de vérification de conformité de système convergent incluant l'identification de données de conformité réelles pour le second ensemble de champs de vérification de conformité de système convergent,
la comparaison des données de conformité réelles avec les données de conformité de base incluant la comparaison de données de conformité réelles pour le second ensemble de champs de vérification de conformité de système convergent avec les données de conformité de base pour le second ensemble de champs de vérification de conformité de système convergent, et
le fait de déterminer si le matériel est en conformité avec le système convergent sur la base de la comparaison entre les données de conformité réelles et les données de conformité de base incluant le fait de déterminer si le second élément de matériel est en conformité avec le système convergent sur la base de la comparaison entre les données de conformité réelles pour le second ensemble de champs de vérification de conformité de système convergent et les données de conformité de base pour le second ensemble de champs de vérification de conformité de système convergent.

4. Procédé selon la revendication 1, dans lequel le matériel inclut un serveur de gestion (162) pour le système convergent.

5. Procédé selon la revendication 1, dans lequel le matériel inclut un commutateur réseau (166).

6. Procédé selon la revendication 1, dans lequel le champ de vérification de conformité de système convergent est récupéré à l'aide d'un appel de transfert d'état représentationnel, REST, vers un serveur distant sur une connexion réseau.

7. Procédé selon la revendication 1, dans lequel le système convergent est un système convergent test et les données de conformité de base étant déterminées par vérification de conformité d'un système convergent modèle incluant un matériel ayant le même objectif que le matériel du système convergent test.

8. Procédé selon la revendication 1, dans lequel les données de conformité de base pour le matériel sont stockées sous formes de valeurs formatées JavaScript Object Notation, JSON, pour une utilisation par le système convergent.

9. Procédé selon la revendication 1, dans lequel la détermination que le matériel est en conformité inclut le fait de déterminer si un ordre de démarrage d'un système informatique à l'intérieur du système convergent est configuré tel que spécifié dans les données de conformité de base.

10. Procédé selon la revendication 1, comprenant en outre :
la détermination, avec le système convergent, de l'objectif du matériel sur la base d'un type de matériel.

11. Support de stockage lisible par machine non transitoire (168) ayant des instructions lisibles par machine stockées à l'intérieur pour amener un processeur informatique à fonctionner selon l'une quelconques des revendications de procédé ci-dessus.

12. Système convergent (144) comprenant :
une ressource de traitement (146) ; et
un ressource de mémoire (148) stockant des instructions lisibles par machine pour amener la ressource de traitement à fonctionner selon l'une quelconque des revendications de procédé 1 à 10.
